# EUROPEAN PATENT APPLICATION

(11) **EP 4 262 290 A1**
(43) Date of publication of application: **18.10.2023**
(21) Application number: 22167925.1
(22) Date of filing: 12.04.2022
(51) Int. Cl.: H04W 52/02

(54) **5G WAKE UP PROCEDURE IN A FMC ENVIRONMENT**

(71) Applicant: Deutsche Telekom AG, 53113 Bonn (DE)
(72) Inventor: Römer, Stefanus, Hennef (DE); Haag, Thomas, Rodgau (DE)
(74) Representative: Braun-Dullaeus Pannen Emmerling Patent- & Rechtsanwaltspartnerschaft mbB

(57) **Abstract**

A method for sending a signalling message, when a 5G core network controls the usage of fixed access lines in a way that user authentication, session management and the user data transfer is done by the 5G core network, wherein a RG is in an idle mode and the signalling message is sent to initiate a data connection between the RG and an AMF of the 5G core network.

## Description

The innovation relates to a method for sending a signalling message , when a 5G core network controls the usage of fixed access lines in a way that user authentication, session management and the user data transfer is done by the 5G core network. The innovation further relates to a network which implements the method.

The innovation is in the context of Fixed Mobile Convergence (FMC), where a fifth generation mobile network (5G) core network controls the usage of fixed access lines such as DSL or optical fiber in such a way that user authentication, session management and the user data transfer is done by the 5G core network according to 3rd generation partnership project (3GPP) standards.

The architectural framework, the terminology, definitions and references used in this application refer to the broadband forum technical report TR-470 "5G Wireless Wireline Convergence Architecture" and other standards developed within the scope of the 3GPP. All the terms, definitions and abbreviations used in these standards are adopted by this application.

An important aspect in a telecommunication network, especially in a mobile telecommunication network, is the energy consumption of the user equipment (UE) connected to the network, the so-called residential gateway (RG respective 5G-RG). In order to save energy, it is desirable to keep the RG in a power-saving respective idle mode as long as there is no need for any active network connection. In the event of any data transmission request in uplink direction (from the RG to the 5G network) the RG is triggered by an application within its local home network and can therefore initiate a new data connection towards the extremal 5G network.

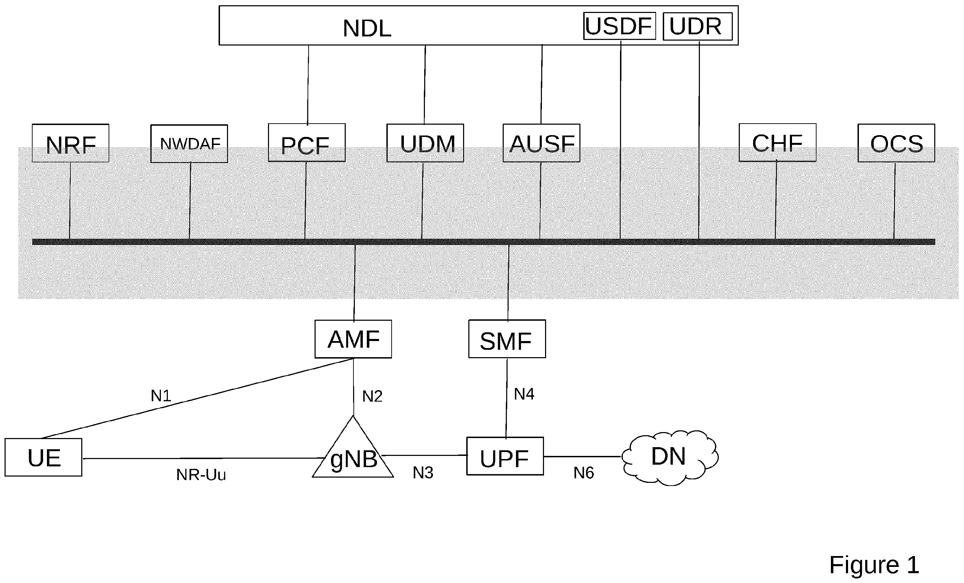

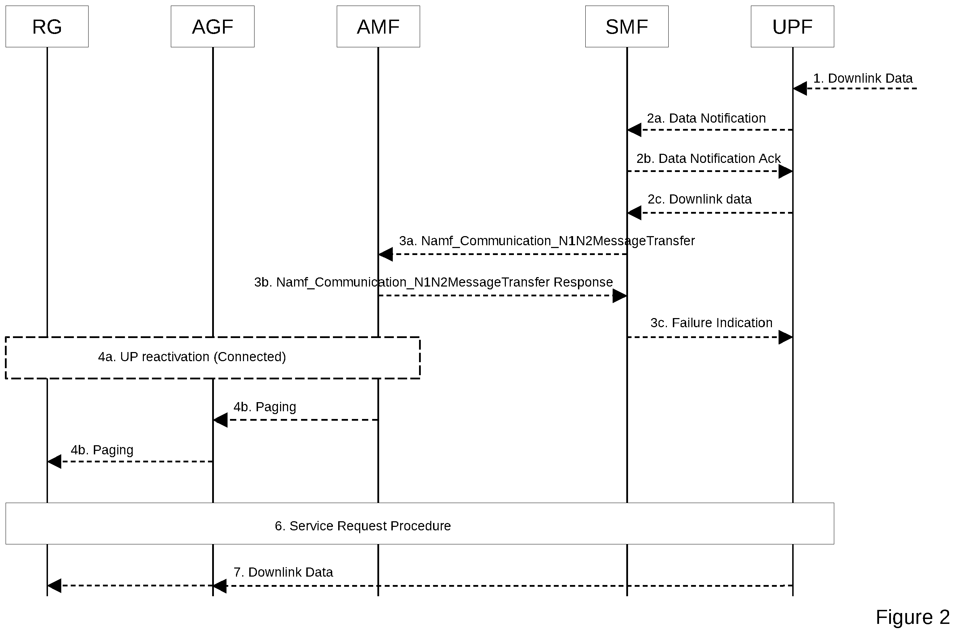

However, in the current solution there is no defined method to initiate a new data connection by the 5G network in cases where data needs to be sent in downlink direction. Downlink in the sense of this application means from the 5G network towards the RG. This would be for example needed in case there is an incoming voice call over the 5G network towards the respective RG. The consequence is that the RG always needs to stay connected and active which results in unnecessary power consumption. In a pure mobile environment a 5G UE can be in a so-called idle mode without any active data connection. In this scenario there is a defined procedure for a network initiate session setup which results in a paging for the requested mobile UE via a next generation nodeB (gNB) in different areas. The gNB is the 5G new radio, the radio access technology developed by the 3GPP for the 5G. The related 5G architecture for a pure mobile network is shown in figure 1. A network-initiated service request in such a 5G architecture contains the known following steps which are outlined by overview with arrows in figure 2:
a) Upon receiving downlink data (DL data) and depending upon the instruction from the session management function (SMF), the user plane function (UPF) will buffer the DL data or send the DL data to the SMF.
b) On arrival of the first DL data packet for any quality of service (QoS) flow, the UPF sends a Data Notification message to the SMF.
c) The SMF responds with a Data Notification Acknowledge (ack) to the UPF.
d) The SMF initiates the UP-tunnel reactivation process by sending Namf_Communication_N1N2MessageTransfer to the access and mobility management function (AMF).
e) Since the UE is in CM-IDLE state at the AMF, then the AMF sends a Paging Message to UE/gNB to locate the UE. At the same time, AMF sends a Namf_Communication_N1N2MessageTransfer response to the SMF immediately with a cause "Attempting to reach UE".
f) Due to Paging , the UE triggers the Service Request Procedure with service type as "mobile terminated services".
g) The UE sends a N2 Message (N2 parameters, MM NAS Service Request) to the AMF.
h) The AMF sends a Nsmf PDUSession_UpdateSMContext Request (protocol data unit (PDU) Session ID(s), Cause(s), UE location information, Access Type) to the SMF which cause an "establishment of user plane resources" for the PDU Session(s) to reactivate the UP tunnel.
i) The SMF informs the UPF which sends Data Notification to discard DL data for the packet data network (PDN) session/not to send further Downlink Messages.
j) The SMF establishes the UP tunnel at the UPF with N4 Session Establishment Request/Response. The SMF sends Nsmf_PDUSession_UpdateSMContext Response (N1 SM containter, N2 SM information) to the AMF. The AMF responds back to gNB with N2 Request (N2 SM information received from SMF, MM NAS Service Accept).
k) The gNB forwards the MM NAS Service Accept to the UE. After the User Plane radio resources are setup, the uplink data from the UE can now be forwarded to the gNB.
l) The gNB sends N2 Request ack to AMF with AN Tunnel Info and the List of accepted QoS Flows for the PDU Sessions whose UP connections are activated.
m) The AMF sends Nsmf_PDUSession_UpdateSMContext Request (N2 SM information (AN Tunnel Info), RAT Type) per PDU Session to the SMF.
n) the SMF sends the radio access network (RAN) Tunnel Info to the UPF in N4 Session Modification Request and the UPF acknowledges the same to confirm the modification of the Tunnel ID.
o) At this stage, the UPF has the RAN Tunnel Info and begins with sending the buffered downlink data towards the gNB.

Upon receiving DL data, the network initiates a Service Request procedure in order to establish the PDU session and transfer the data.

The Network Triggered Service Request procedure is used when the network needs to signal with an UE (e.g. N1 signalling to UE, Mobile-terminated SMS, User Plane connection activation for PDU Session(s) to deliver mobile terminating user data).

The procedure below covers the following non exhaustive list of use-cases for 3GPP access with regard to the steps as shown above:
- The SMF needs to setup N3 tunnel to deliver downlink packet to the UE for a PDU Session and the UE is in CM-IDLE state: Step 3a contains an N2 message and Step 4b (paging) is performed.
- The SMF needs to setup N3 tunnel to deliver downlink packet to the UE for a PDU Session and the UE is in CM-CONNECTED state: Step 3a contains an N2 message and Step 4a (UP reactivation) is performed.
- The NF (e.g. SMF, SMSF, PCF or LMF) needs to send an N1 message to the UE, using the Namf_ Communication_N1N2MessageTransfer service operation, and the UE is in CM-IDLE state: Step 3a contains an N1 message, Step 3b contains cause "Attempting to reach UE", and Step 4b (paging) occurs.
- The LMF triggers AMF, using the Namf_ Communication_N1N2MessageTransfer service operation, to setup a NAS connection with the UE and the UE is in CM-IDLE state: Step 3b contains cause "Attempting to reach UE", and step 4b (paging) occurs.
- The GMLC triggers AMF, using the Namf_Location_ProvideLocation service operation, to setup a NAS connection with the UE and the UE is in CM-IDLE state: Step 4b (paging) occurs.
- The PCF needs to send a message to the UE, using the Npcf_AMPolicyControl_Create Response service operation, or the Npcf AMPolicyControlUpdateNotify service operation and the UE is in CM-IDLE state: Step 3a contains a message, and step 4b (paging) occurs.
- The NF (e.g. SMSF) triggers AMF, using the Namf_MT_EnableUEReachability service operation, to setup a NAS connection with the UE and the UE is in CM-IDLE state: The trigger is specific to the procedure and Step 4b (paging) occurs.

If the UE is in CM-IDLE state in 3GPP access, upon reception of paging request for a PDU Session associated to 3GPP access, the UE shall initiate the UE Triggered Service Request procedure.

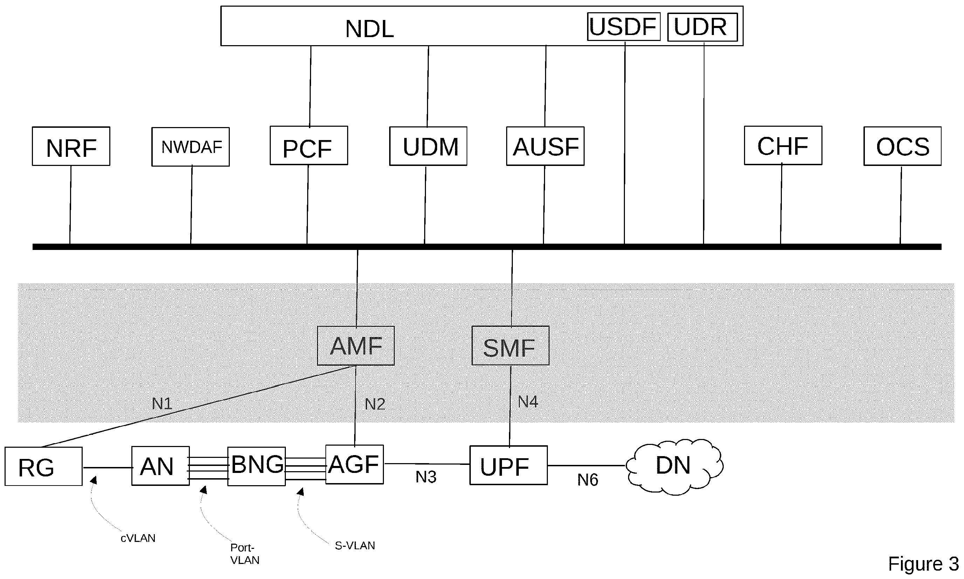

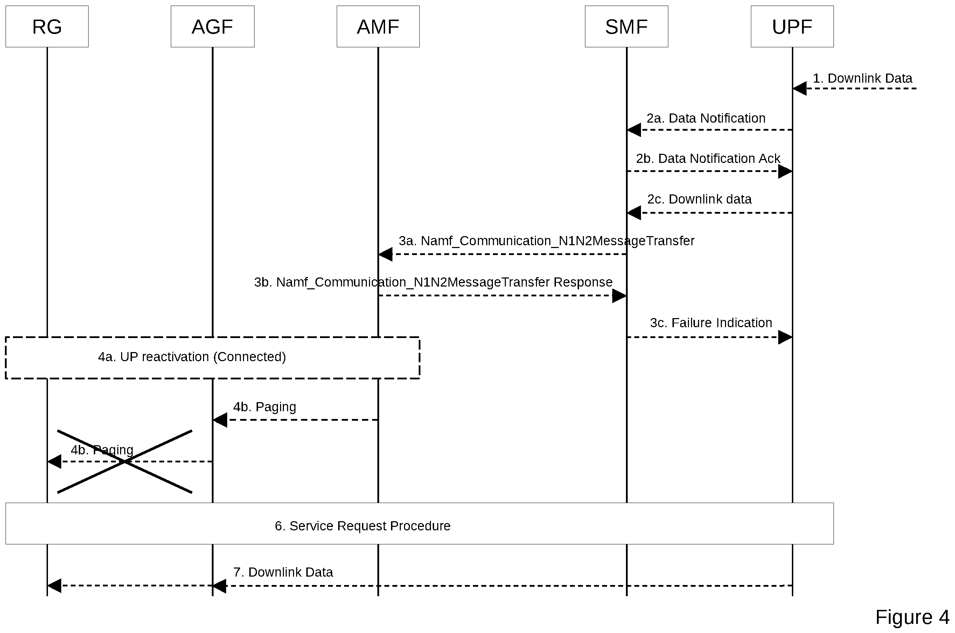

But this procedure is not practicable in a FMC architecture which is shown in figure 3. Paging does not exist on fixed access line as shown in figure 4.

Hence, it is the task of this invention to define and provide a method to send a signalling message to initiate a data connection between the 5G-RG and the 5G core network, in particular an AMF of the 5G core network. which is equivalent to the paging in a pure mobile scenario towards the RG in case of a network initiated session setup request. It is also a task of this invention to define and provide a new method to send a signalling message to initiate a data connection between the RG and the 5G core network, in particular an AMF of the 5G core network, from the client towards the 5G network in case of a client initiated session setup. Another task of this invention is a FMC network which implements the method.

These objectives are solved by the features of the independent claims. The dependent claims describe some preferred embodiments of the inventive method.

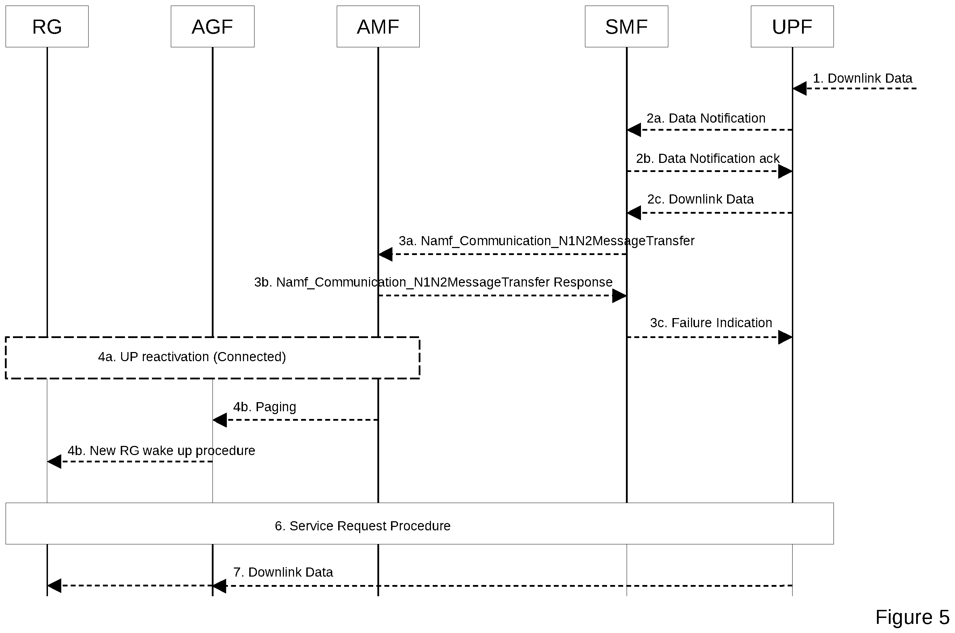

The inventive method for sending a signalling message is implemented in a scenario where a 5G core network controls the usage of fixed access lines in such a way that user authentication, session management and the user data transfer is done by the 5G core network as shown with figure 5. Even if the inventive method is described in the context of a 5G core network, this term discloses a core network of any further generation network.

The inventive method of claim 1 allows to establish a new data connection between the RG and the 5G core network and therefore, allows the RG to save energy by switching into a standby mode respective idle mode until an establishment of a new data connection is necessary.

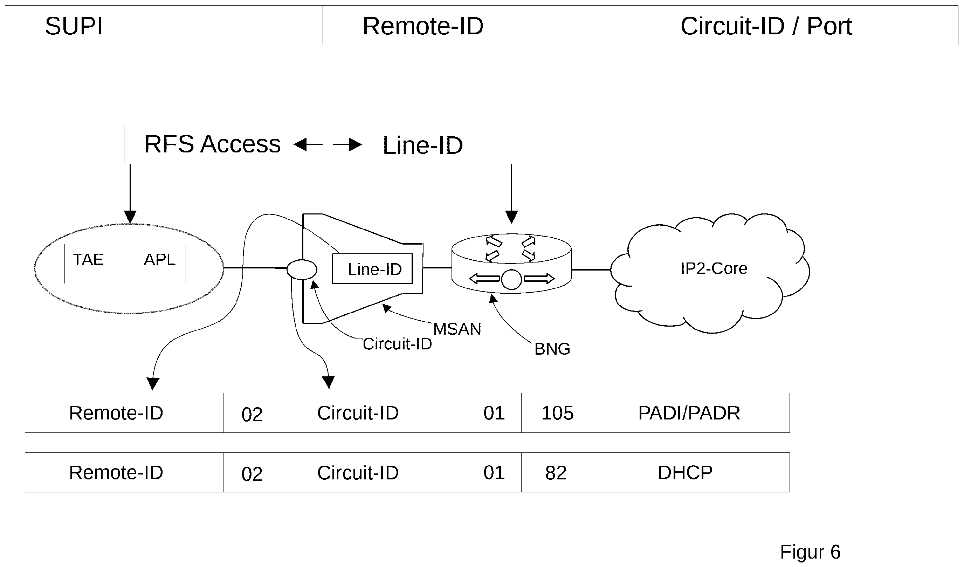

In a preferred embodiment the inventive method comprises a mobile network initiated service request to trigger a 5G-RG wake up procedure. The new wake up procedure is shown by arrow "4b New RG wake up procedure" in figure 5. The procedure replaces the 4b paging arrow between the AGF and the RG as shown in figure 1. Upon receiving the "RG wake up message" the RG will re-establish the complete session. The method is based on at least one the following core considerations:
- The AGF acts as a gNB towards the AMF and can treat a paging requests for a given RG.
- The paging request contains the SUPI of the RG. The SUPI can be mapped upon a Line-ID for the requested RG. An embodiment of a preferred wake-up mapping table in the AGF is shown in figure 4.
- Based on the Line-ID the AGF maintains a mapping table where the AGF can find the respective Access Node (AN) where the requested RG is connected to. Based on the Circuit-ID the AGF can find the corresponding port or circuit on the AN where the 5G-RG is connected to. An example for such a wake-up mapping table is shown in Figure 6 which is based on TR-456 "AGF Functional Requirements". The line-ID shown in this figure is also known as Access-Remote-ID (ARI). The circuit-ID is also known as Access-Circuit-ID (ACI).
- Then the AGF starts the "5G RG wake up procedure" in order to reactivate the layer 1 and layer 2 connections within the access network. There is a signalling network between the AGF and all Access Network which is used to send a wake up signal for the requested RG (identified by the Line-ID) towards the respective AN. Upon receiving such a wake up signal the AN will send another wake up signal to the respective RG (which is in power saving or idle mode) via the wired access line like DSL or fiber. Different solution options for layer layer 1 and layer 2 reactivation are described hereafter.
- Upon receiving a wake up signal the RG changes to active mode and establish a data session towards the 5G network according to TR-470.

According to a first aspect of the invention, a method is provided for a mobile network initiated service request with a residential gateway wake up procedure. The method presented below is based on the network initiated service request in a pure mobile 5G scenario outlined previously. The inventive method differs in the steps e) - g), j) - I) and o) of the method which have been adapted according to the core considerations of the invention.

The method comprises the following steps:
a) Upon receiving DL data and depending upon the instruction from a SMF, an UPF will buffer the downlink data or send the DL data to the SMF.
b) On arrival of the first downlink data packet for any QoS Flow, the UPF sends a Data Notification message to the SMF.
c) The SMF responds with a Data Notification Acknowledge to the UPF.
d) The SMF initiates an UP tunnel reactivation process by sending Namf_Communication_N1N2MessageTransfer to the AMF.
e) Since a 5G-RG is in a CM-IDLE state at the AMF then the AMF sends a Paging Message to the AGF to locate the 5G-RG. The AGF will send a corresponding wake-up signalling message to the serving Access Node which will forward this message to the requested 5G-RG. At the same time, the AMF sends a Namf_Communication_N1N2MessageTransfer response to the SMF immediately with a cause "Attempting to reach UE".
f) Due to the Wake Up message, the 5G-RG triggers a Service Request procedure with service type as "mobile terminated services".
g) The 5G-RG sends a N2 Message (N2 parameters, MM NAS Service Request) to the AMF.
h) The AMF sends a NsmfPDUSessionUpdateSMContext Request (PDU Session ID(s), Cause(s), UE location information, Access Type) to the SMF with cause a "establishment of user plane resources" for the PDU Session(s) to reactivate the UP tunnel.
i) The SMF informs the UPF which sends Data Notification to discard the DL data for the PDN session/not to send further Downlink Messages.
j) The SMF establishes the UP tunnel at the UPF with a N4 Session Establishment Request/Response. The SMF sends a Nsmf_PDUSession_UpdateSMContext Response (N1 SM containter , N2 SM information) to the AMF. The AMF responds back to the AGF with a N2 Request (N2 SM information received from SMF, MM NAS Service Accept).
k) The AGF forwards the MM NAS Service Accept to the 5G-RG. After the User Plane session is setup, the uplink data from the 5G-RG can now be forwarded to the AGF.
l) The AGF sends N2 Request ack to the AMF with an AN Tunnel Info, the List of accepted QoS Flows for the PDU Sessions whose UP connections is activated.
m) The AMF sends Nsmf_PDUSession_UpdateSMContext Request (N2 SM information (AN Tunnel Info), RAT Type) per PDU Session to the SMF.
n) The SMF sends the RAN Tunnel Info to the UPF in a N4 Session Modification Request and the UPF acknowledges the same to confirm the modification of the Tunnel ID.
o) At this stage, the UPF has the RAN Tunnel Info and begins with sending buffered downlink data towards the AGF.

Some preferred embodiments of the inventive method are related to different types of fixed lines connections like PON or DSL. In case of a PON the prerequisites for the preferred embodiments are the usage of the power saving functions in G.9807.1 amendment 1 and the four power management states for an ONU, ActiveHeld, ActiveFree, Aware and LowPower, as described in Table C.16.2 for a XGS-PON.

A general requisite for the preferred embodiments is that the 5G-RG must have had at least one active 5G network registration before such a network initiated wake up procedure can happen (auto detection -> mapping table entry). An alternative could be to pre-configure the mapping table.

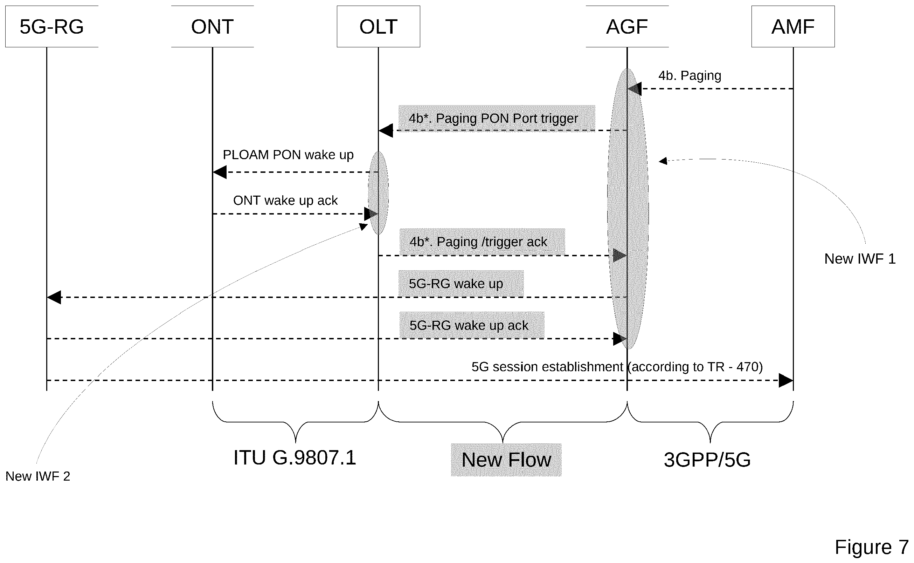

A first preferred embodiment for a network initiated wake-up procedure as shown in figure 7 is related to a PON, preferably a XGS-PON.

Between the AMF and the AGF the known paging (arrow 4b.) is used. The grey marked New Flow includes two new interworking functions IWF 1 and IWF 2. In the IWF 1 the assignment of PON Port/SerNo is proceeded based on SUPI and Line-ID Information. Also a new message format is added to steer OLT PON Port power saving. Using PLOAM on PON the IWF 2 transports the new wake-up information.

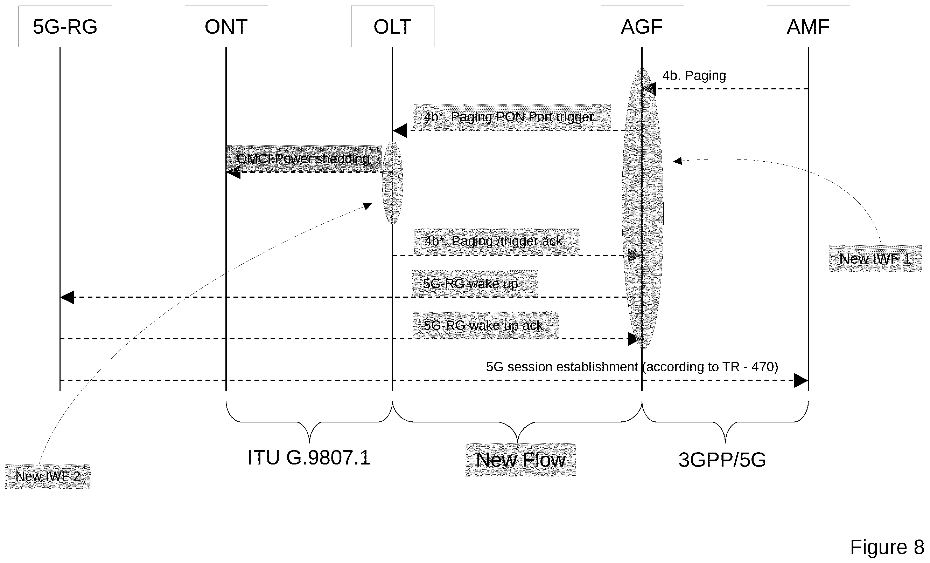

A second preferred embodiment also related to a PON, preferably a XGS-PON, is shown with figure 8. This embodiment uses a OMU management and control interface (OMCI power shredding) on PON. Instead of the previous IWF 1, in the IWF 1 of figure 8 the assignment of PON Port/SerNo is proceeded based on Line-ID Information. The other functions and flows remain unchanged.

While figures 7 and 8 show the 5g-RG and the ONT as separate devices, both may be integrated in one device.

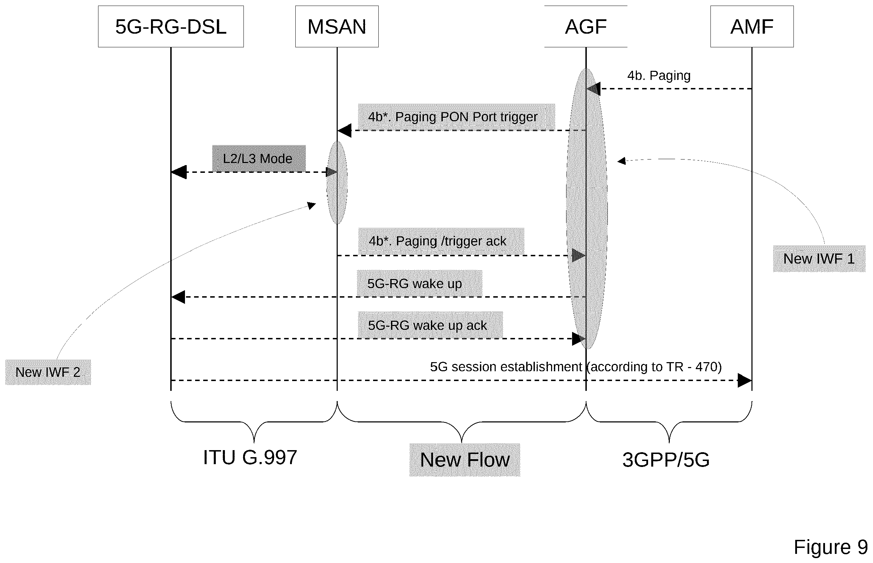

Figure 9 shows a preferred network initiated wake-up for a FMC with DSL, preferably in VDSL L2 Mode. In this IWF 1 the assignment of PON Port/SerNo is proceeded based on Line-ID Information. Here also a new message format is added to steer OLT PON Port power saving. Between the MSAN and the 5G-RG-DSL the L2/L3 mode on DSL is used. The new wake-up information is handled between the AGF and the 5G-RG-DSL.

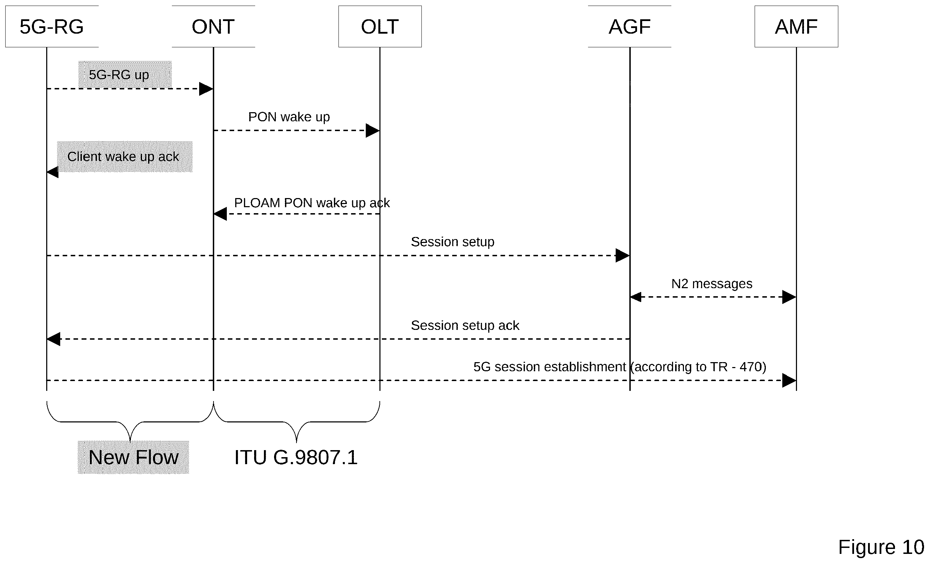

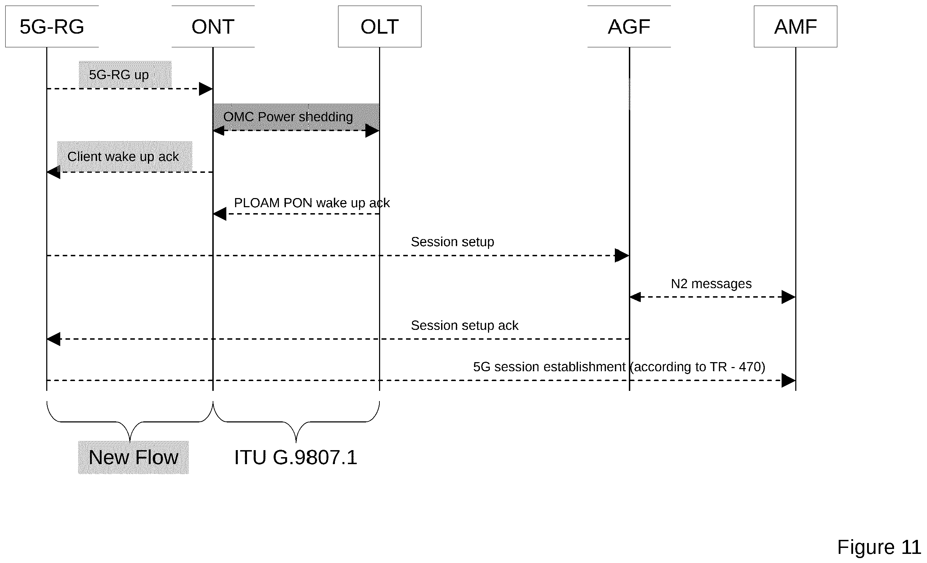

In a preferred embodiment the inventive method comprises a RG initiated service request to initiate a data connection between the RG and the 5G core network, preferably the AMF of the 5G core network. Preferred embodiments for a RG enforced wake-up in a FMC are shown with figures 10 for PON using PLOAM and with figure 11 for PON using OMCI. In these embodiments the 5G-RG notification is used between 5G-RG and ONT. The grey marked New Flow with its wake-up information is sent towards ONT. Again the 5g-RG and the ONT shown in the embodiments related to PON are shown as separate devices, but both may be integrated in one device.

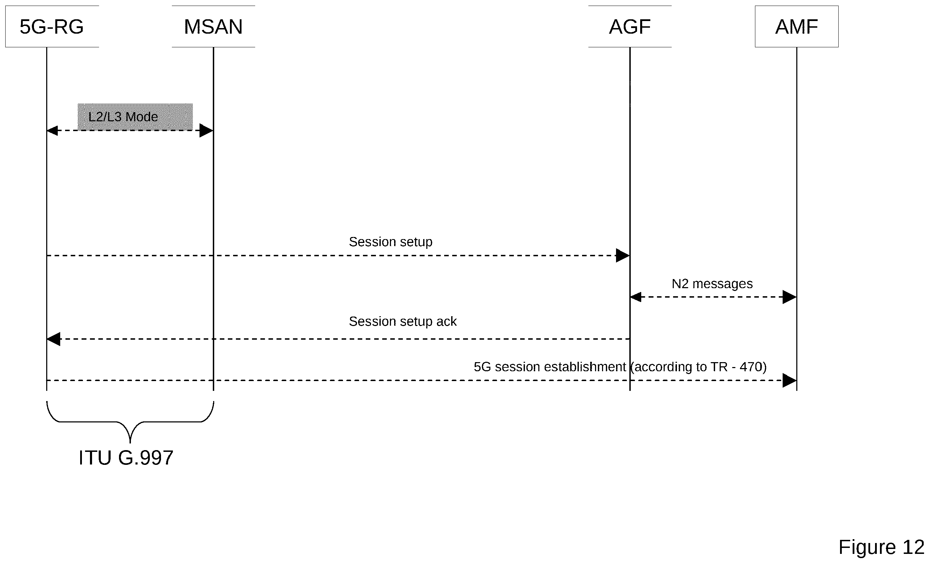

Figure 12 shows a preferred embodiment for a FMC with DSL, preferably with VDSL L2 Mode. Identical to the embodiment shown with figure 9 the L2/L3 mode on DSL is used between the MSAN and the 5G-RG-DSL.

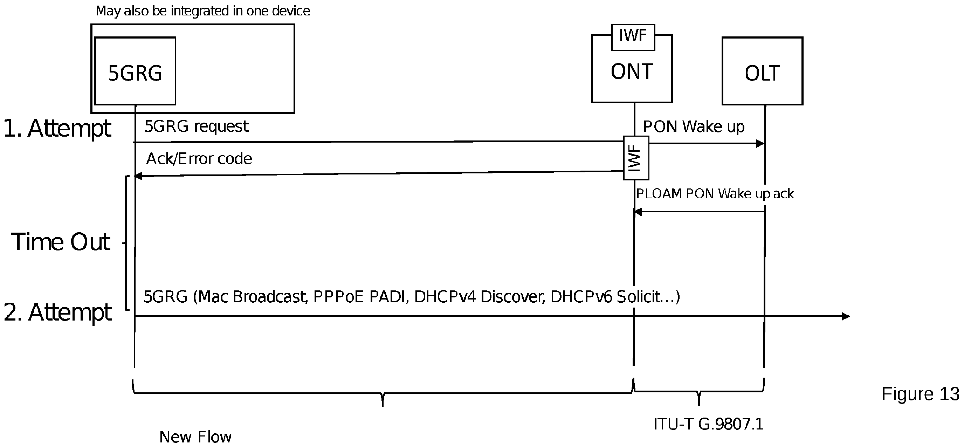

A generic RG initiated respective client initiated wake up procedurein a PON use case is shown with figure 13. The new flow contains three successive steps and specifies protocols preferably used in this context. In a first step the RG sends a request to the ONT. As the data connection is not established at that time, the ONT sends a PON wake up signal towards the OLT. The ONT also sends an acknowledge towards the RG including an Error Code. The received acknowledge causes a time out period at the RG which is used to establish the new data connection towards the network. During the time out the OLT sends a PLOAM PON wake up acknowledge towards the ONT. When the time out has expired the RG starts a second attempt which is successful due to the now established data connection.

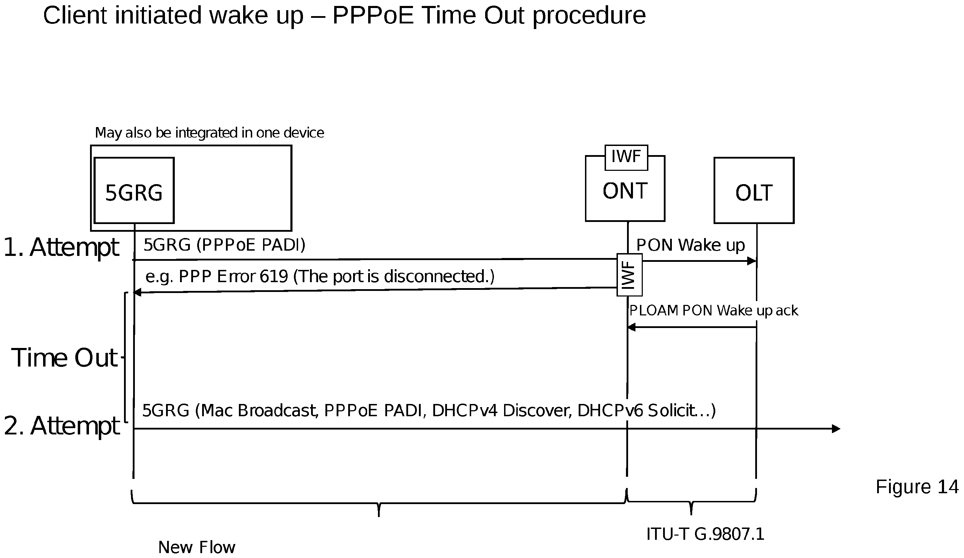

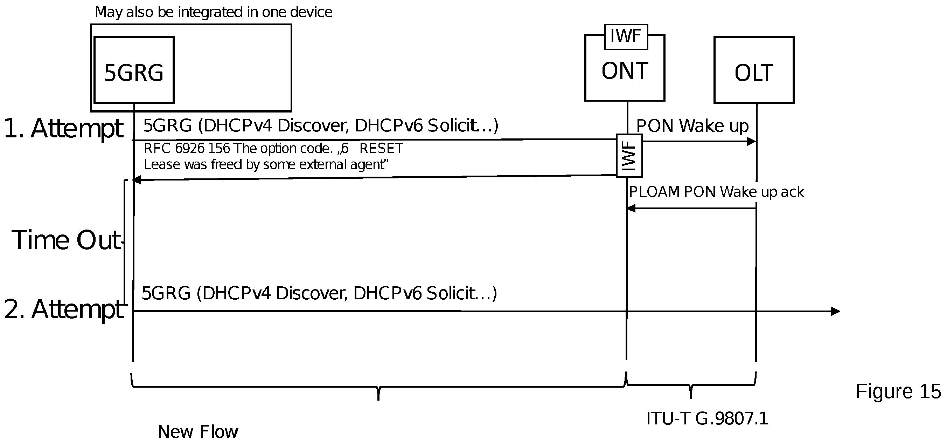

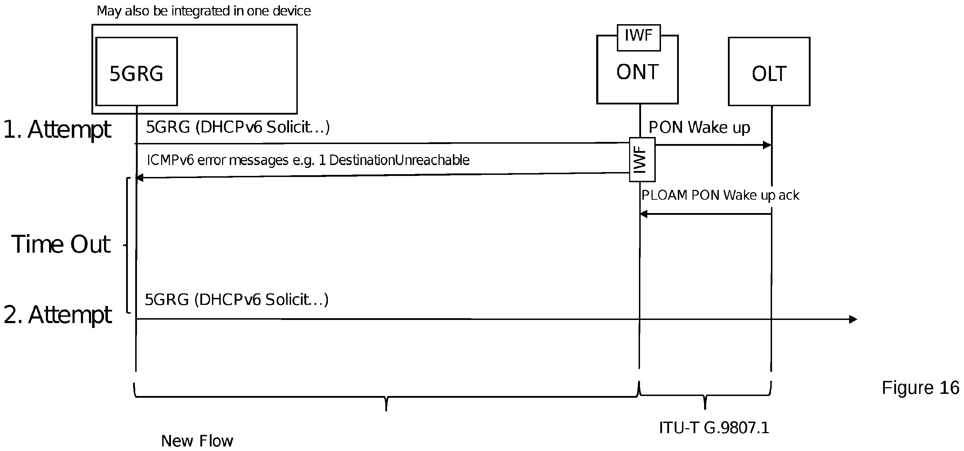

Figure 14-16 show preferred embodiments of this generic client initiated wake up procedure for a PPPoE, a DHCPv4 and a DHCPv6 use case.

The power reduction in a VDSL2 MSAN will not come mainly from transmitting with lower power, but also from lowering the activity of the processing circuitry such as DSP, AFE as well as the NP.

For a power consumption in a potential L2 mode the power consumed in idle mode is around 50 % lower than in full power.

In the idle mode the DSP is sleeping, as well as part of the network processor. As consequence the time to wake up a modem from this state would require a retrain of the modem that could last up to 30s, which lead to bad user experience specifically making phone calls.

Therefore, the embodiments shown with figures 7, 8, 10 and 11 are targeted to optic fiber access systems like PON, EPON, XGS-PON, etc..

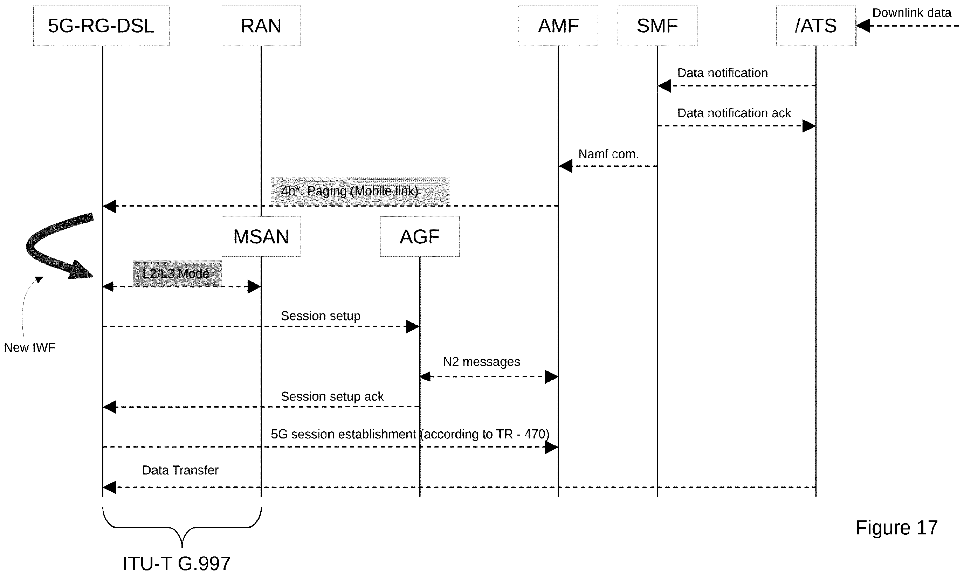

Especially for DSL wake up it may be appropriate using a 5G-RG with dual uplink (fixed & mobile) and use the paging signal on mobile leaf to wake up fixed in case of high bandwidth requested. This leads to another preferred embodiment shown with figure 17 which overcomes the situation that wake up on DSL needs 30 sec and impacts user experience.

In this embodiment LTE is used for the standard paging between AMF and 5G-RG (arrow 4b*). A new IWF in the 5G-RG triggers AN to wake up from L3. In the meantime the mobile link will serve until fixed capacity is established and ATSSS, which uses fixed according policy rules, takes over. Thus, the new IWF also triggers the ATSSS "establishing completed".

The features of the various aspects of the invention described in this application or the various described examples of implementation may be combined with each other, unless this is explicitly excluded or is technically impossible.

## Claims

1. A method for sending a signalling message, when a 5G core network controls the usage of fixed access lines in a way that user authentication, session management and the user data transfer is done by the 5G core network,
**wherein,**
a RG is in an idle mode and the signalling message is sent to initiate a data connection between the RG and an AMF of the 5G core network.

2. A method according to claim 1,
**wherein**
an AGF treats a paging message for a requested RG, in particular acts as a gNB towards the AMF, to initiate a network initiated wake up procedure.

3. A method according to claim 2,
**wherein**,
the paging message contains a SUPI of the 5G-RG.

4. A method according to claim 2 or 3,
**wherein**,
the AGF maintains a mapping table where the AGF can find the respective AN where the requested RG is connected to.

5. A method according to claim 4,
**wherein**,
the AGF sends a wake up signal for the requested RG towards an identified AN in order to reactivate the layer 1 and layer 2 connections within an access network.

6. A method according to claim 5,
**wherein**,
upon receiving the wake up signal the AN will send another wake up signal to the requested RG via the fixed access line.

7. A method according to claim 5,
**wherein**,
upon receiving the wake up signal the RG changes to active mode and establishs a data session towards the 5G network.

8. A method according to any of the claims 1 to 7 which comprises the following steps:
a) Upon receiving DL data and depending upon the instruction from a SMF, an UPF will buffer the downlink data or send the DL data to the SMF;
b) On arrival of the first downlink data packet for any QoS Flow, the UPF sends a Data Notification message to the SMF;
c) The SMF responds with a Data Notification Acknowledge to the UPF;
d) The SMF initiates an UP-tunnel reactivation process by sending Namf_Communication_N1N2MessageTransfer to the AMF;
e) Since a RG is in a CM-IDLE state at the AMF then the AMF sends a Paging Message to the AGF to locate the RG; The AGF will send a corresponding wake-up signalling message to the serving Access Node which will forward this message to the requested RG; the AMF sends a Namf_Communication_N1N2MessageTransfer response to the SMF with a cause "Attempting to reach UE";
f) Due to the Wake Up message, the 5G-RG triggers a Service Request procedure with a service type as "mobile terminated services";
g) The RG sends a N2 Message to the AMF;
h) The AMF sends a NsmfPDUSessionUpdateSMContext Request to the SMF with cause a PDU Session to reactivate the UP-tunnel;
i) The SMF informs the UPF which sends a Data Notification to discard the DL data for the PDN session not to send further Downlink Messages;
j) The SMF establishes the UP-tunnel at the UPF with a N4 Session Establishment Request/Response; the SMF sends a Nsmf_PDUSession_UpdateSMContext to the AMF; the AMF responds back to the AGF with a N2 Request;
k) The AGF forwards the MM NAS Service Accept to the RG; after the User Plane session is setup, the uplink data from the RG can be forwarded to the AGF;
l) The AGF sends a N2 Request ack to the AMF with an AN Tunnel Info, the list of accepted QoS Flows for the PDU Sessions whose UP connections is activated;
m) The AMF sends a Nsmf_PDUSession_UpdateSMContext Request per PDU Session to the SMF;
n) The SMF sends the RAN Tunnel Info to the UPF in a N4 Session Modification Request and the UPF acknowledges the same to confirm the modification of the Tunnel ID;
o) The UPF begins with sending buffered downlink data towards the AGF.

9. A method according to claim 8,
**wherein**
the assignment of a PON Port/SerNo is proceeded based on SUPI and Line-ID Information.

10. A method according to claim 8,
**wherein**
LTE is used for the standard paging between the AMF and the RG.

11. A method according to claim 1,
**wherein,**
the RG sends the signalling message towards an ONT to initiate a client initiated wake up procedure.

12. A method according to claim 11,
**wherein**,
the RG sends the signalling message towards an MSAN to initiate a client initiated wake up procedure.

13. A method according to claim 11 or 12,
**wherein**,
receiving an answer from the ONT or the MSAN causes a time out period at the RG which is used to establish a data connection beteen the RG and the AMF.14. A 5G mobile network for implementing the method of any of the claims 1 to 13, comprising a RG connected by a fixed access line to an AGF.
